(19) Europäisches Patentamt
European Patent Office
Office européen des brevets

(11) EP 4 494 468 A1

(12) # EUROPEAN PATENT APPLICATION
published in accordance with Art. 153(4) EPC

(43) Date of publication:
**22.01.2025 Bulletin 2025/04**

(21) Application number: **23770710.4**

(22) Date of filing: **13.03.2023**

(51) International Patent Classification (IPC):
***A01N 43/56*** *(2006.01)* ***A01N 25/00*** *(2006.01)*
***A01N 25/30*** *(2006.01)* ***A01P 3/00*** *(2006.01)*
***A01P 7/04*** *(2006.01)* ***A01P 13/00*** *(2006.01)*
***A01P 21/00*** *(2006.01)*

(52) Cooperative Patent Classification (CPC):
**A01N 25/00; A01N 25/30; A01N 43/56; A01P 3/00; A01P 7/04; A01P 13/00; A01P 21/00**

(86) International application number:
**PCT/JP2023/009547**

(87) International publication number:
**WO 2023/176755 (21.09.2023 Gazette 2023/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.03.2022 JP 2022039268**

(71) Applicant: **Sumitomo Chemical Company, Limited
Tokyo 103-6020 (JP)**

(72) Inventors:
- **MIZOGUCHI, Nanako
Tokyo 103-6020 (JP)**
- **KURODA, Nami
Tokyo 103-6020 (JP)**

(74) Representative: **Vossius & Partner
Patentanwälte Rechtsanwälte mbB
Siebertstrasse 3
81675 München (DE)**

(54) **AGROCHEMICAL COMPOSITION**

(57) The present invention provides a composition comprising an agrochemical active compound which is poorly water-soluble and is in a form of a solid at the temperature of 25°C, a thickener including a water-soluble polymer, an antifreezing agent and water, which has a good storage stability. The content of the agrochemical active compound in the composition is 20 % by mass or more based on 100 % by mass of the composition, and the agrochemical active compound includes the compound represented by formula (I) below.

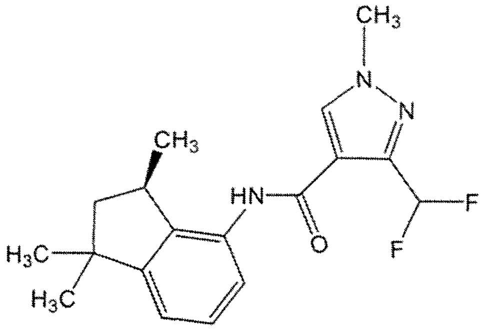

(I)

$$\Delta V\ [\%] = (V2-V1)/V1 \times 100 \qquad (a)$$

[In equation (a), V1 represents a viscosity [Pa . s] at the temperature of 40 °C of the below-mentioned composition X, and

V2 represents a viscosity [Pa . s] at the temperature of 60 °C of the below-mentioned composition X, and the composition X is a composition which is characterized by consisting of the compound (I) 37.00 parts by mass, the first surfactant 4.63 parts by mass, silicon defoamer 0.19 parts by mass, and water 32.85 parts by mass].

## Description

TECHNICAL FIELD

This application claims priority to and the benefit of Japanese Patent Application No. 2022-039268 filed March 14, 2022, the entire contents of which are incorporated herein by reference.
The present invention relates to a composition comprising an agrochemical active compound.

BACKGROUND ART

A compound represented by the below-mentioned formula (I) (hereinafter, sometimes referred to as "compound (I)") has been known as an agrochemical active compound (see Patent literature 1).

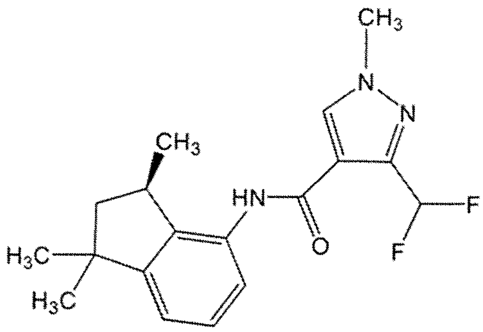

(I)

CITATION LIST

PATENT LITERATURE

Patent Literature 3: WO 2011/162397 A1

SUMMARY OF THE INVENTION

(PROBLEMS TO BE SOLVED BY INVENTION)

In the preparation of an aqueous suspension concentrate comprising the compound (I), it is often found that a storage stability is lowered depending on an increase of the total content of the agrochemical active compound in the aqueous suspension concentrate.
An object of the present invention is to provide a composition having a good storage stability even when the agrochemical active compound is suspended into water such that the total content of the agrochemical active compound including the compound (I) is 20 % by mass or more.

(MEANS TO SOLVE PROBLEMS)

The present invention provides a below-mentioned composition.

[1] A composition comprising an agrochemical active compound which is poorly water-soluble and is in a form of a solid at the temperature of 25°C, a surfactant, a thickener, an antifreezing agent and water,

the content of the agrochemical active compound is 20 % by mass or more based on 100 % by mass of the composition,
the agrochemical active compound includes at least the compound represented by following formula (I),
the surfactant has a viscosity increase ratio expressed by the following equation (a): ΔV [%] being 45 % or less, and
the thickener includes a water-soluble polymer,

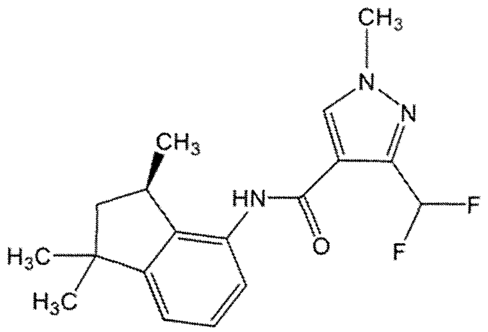

(I)

$$\Delta V\ [\%] = (V2-V1)/V1 \times 100 \qquad (a)$$

[In equation (a),
V1 represents a viscosity [Pa · s] at the temperature of 40 °C of the below-mentioned composition X, and
V2 represents a viscosity [Pa · s] at the temperature of 60 °C of the below-mentioned composition X,
the composition X is a composition which is characterized by consisting of the compound represented by formula (I) 37.00 parts by mass, the surfactant 4.63 parts by mass, a silicon defoamer 0.19 parts by mass, and water 32.85 parts by mass].

[2] The composition according to [1] wherein the content of the surfactant is 4 % by mass or more.
[3] The composition according to [1] or [2] wherein the surfactant includes one or more compounds selected from the group consisting of a lignin sulfonate, an acrylic polymer, an acrylic graft copolymer, and a modified stylene-maleic anhydride copolymer.
[4] The composition according to any one of [1] to [3] wherein the viscosity increase ratio of the surfactant is 20 % or less.
[5] A method for selecting a surfactant for aqueous suspension concentrate containing a compound represented by following formula (I), which comprises

a step of preparing a composition X which is characterized by consisting of a compound represented by following formula (I) 37.00 parts by mass, a surfactant 4.63 parts by mass, a silicon defoamer 0.19 parts by mass, and water 32.85 parts by mass,
a step of measuring a viscosity of the composition X while increasing the temperature from 40°C to 80°C at an increase ratio of 1 °C/min, and
a step of selecting a surfactant having 45 % or less as a vicosity increase ratio ΔV [%] expressed by following equation (a) which is contained in a composition X.

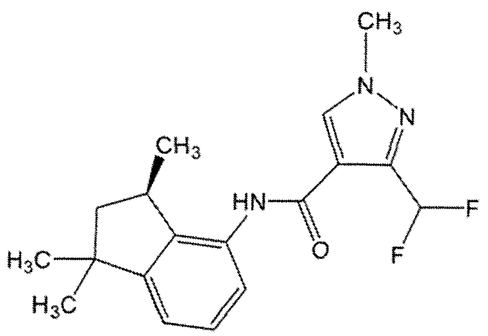

(I)

$$\Delta V\ [\%] = (V2-V1)/V1 \times 100 \qquad (a)$$

[In equation (a),
V1 represents a viscosity [Pa · s] at the temperature of 40 °C of the below-mentioned composition X, and
V2 represents a viscosity [Pa · s] at the temperature of 60 °C of the below-mentioned composition X].

EFFECT Of INVENTION

The present invention can provide a composition having a good storage stability even when the agrochemical active compound is suspended into water such that the total content of the agrochemical active compound including the compound (I) is 20 % by mass or more.

MODE FOR CARRYING OUT THE INVENTION

A composition according to the present invention (hereinafter, sometimes referred to as "composition of the present invention") comprises

an agrochemical active compound which is poorly water-soluble and is in a form of a solid at the temperature of 25°C (hereinafter, sometimes referred to as "present agrochemical active compound"),
a surfactant having a viscosity increase ratio ΔV [%] expressed by the following equation (a) being 45 % or less (hereinafter, sometimes referred to as "present surfactant"),
a thickener including a water-soluble polymer,
an antifreezing agent, and
water.

In the composition of the present invention, the content of the present agrochemical active compound is 20 % by mass or more, and the present agrochemical active compound includes the compound (I).

$$\Delta V\ [\%] = (V2-V1)/V1 \times 100 \qquad (a)$$

[In equation (a),

V1 represents a viscosity [Pa · s] at the temperature of 40 °C of the below-mentioned composition X, and
V2 represents a viscosity [Pa · s] at the temperature of 60 °C of the below-mentioned composition X, and
the composition X is a composition which is characterized by consisting of the compound (I) 37.00 parts by mass, the present surfactant 4.63 parts by mass, a silicon defoamer 0.19 parts by mass, and water 32.85 parts by mass.]

In the composition of the present invention, the compound (I) is preferably dispersed in a solid state into water. When the present agrochemical active compound includes any agrochemical active compounds other than the compound (I) (hereinafter, sometimes referred to as "the second agrochemical active compound"), the second agrochemical active compound is preferably dispersed in a solid state into water. The composition of the present invention is preferably an aqueous suspension concentate comprising the present agrochemical active compound in a form of a solid, the present surfactant, a thickener, an antifreezing agent, and water.

In the composition of the present invention, a volume median diameter of the present agrochemical active compound which is dispersed into water is usually 15 μm or less, preferably within a range of 0.1 μm or more to 11 μm or less, more preferably 0.2 μm or more to 7 μm or less. The volume median diameter is a particle size at which a cumulative frequency in frequency distribution on the basis of volume is adjusted to be 50 %. As described below in the working examples, the volume median diameter of the present agrochemical active compound in the present composition can be calculated by a wet measurement in which the present agrochemical active compound is measured in a state of dispersing into water using a laser diffraction particle size distribution analyzer.

The agrochemical active compound contained in the composition of the present invention is poorly water-soluble and is in a form of a solid at the temperature of 25°C. The agrochmecal active compound which is poorly water-soluble represents an agrochemical active compound having a solubility of 1 g or less against water 1L at the temperature of 25°C.

The content of the present agrochemical active compound in the composition of the present invention is 20 % by mass or more and may be 25 % by mass or more, or may be 50 % by mass or less, or may be 40 % by mass or less, based on 100 % by mass of the composition of the present invention. When the present agrochemical active compound comprises two or more of the agrochemical active compounds, the content of the present agrochemical active compound represents the total content thereof.

The present agrochemical active compound may be composed by one or more compounds, and includes at least the compound (I). The compound (I) is a publically known compound, and can be prepared by a method described in, for example, WO 2011/162397 A1. The compound (I) is a R isomer.

The content of the compound (I) in the composition of the present invention is 0.4 % by mass or more, and may be 1.0 % by mass or more, may be 5 % by mass or more, may be 20 % by mass or more, may be 25 · by mass or more, or may be 50 % by mass or less, may be 45 % by mass or less, or may be 40 % by mass or less, based on 100 % by mass of the

composition of the present invention.

The agrochemical active compound may comprise one or two or more (for example, three, four, or five) of the second agrochemical compounds. The content of the second agrochemical active compound in the composition of the present invention is 0.4 % by mass or more, and may be 1 % by mass or more, may be 10 % by mass or more, or may be 49.5 % by mass or less, may be 40 % by mass or less, or 30 % by mass or less, based on 100 % by mass of the composition of the present invention. When the second agrocehmical active compound comprises two or more of the agrochemical active compounds, the content of the second agrochemical active compound represents the total content thereof.

When the composition of the present invention comprises the second agrochemical active compound, examples of the ratio by weight of the compound (I) to the second agrochemical active compound (the compound (I) : the second agrochemical active compound) include 1:100 to 100:1, 1:10 to 10:1, 1:5 to 5:1, and 3:10 to 10:3. When the second agrochemical active compound comprises two or more of the agrochemical active compounds, the content of the second agrochemical active compound represents the total content thereof.

Examples of the second agrochemical active compound include one or more of the compounds selected from the group consisting of an insecticidal compound, a fundicidal compound, a herbicidal compound, and a plant growth regulating compound.

Examples of the above-mentioned insecticidal compound include dimethylvinphos, acephate, salithion, bendiocarb, thiodicarb, NAC, MIPC, bensultap, diflubenfuron, teflubenzuron, chlorfluazuron, buprofezin, fenoxycarb, pyridaben, clofentezine, hexythiazox, fipronil, ethiprole, clothianidin, imidacloprid, and thiacloprid.

Examples of the above-mentioned fundicidal compound include thiram, tecloftalam, carpropamid, dicrocimet, tricyclazole, fthalide, kresoxim-methyl, trifloxystrobin, metominostrobin, pyraclostrobin, picoxystrobin, azoxystrobin, orysastrobin, benomyl, ferimzone, flusulfamide, probenazole, captan, diethofencarb, diclomezine, TPN, mancozeb, iprodione, triadimefon, hexaconazole, tebuconazole, difenoconazole, mefentrifluconazole, furametpyr, flutolanil, mepronil, oxolinic acid, pyrimethanil, mepanipyrim, PCNB, isoprothiolane, fenpyrazamine, procymidone, and mandestrobin.

Examples of the above-mentioned herbicidal compound include simetryn, dymron, propanil, mefenacet, fentrazamide, etobenzanid, swep, oxaziclomefone, pyrazolate, prodiamine, cafenstrole, pentoxazone, clomeprop, pyriftalid, benzobicyclo, bromobutide, propyrisulfuron, flumioxazin, oxadiazolone, pyroxasulfone, flumiclorac-pentyl, lactoferrin, flufenacet, isoxaflutole, and cloransulam-methyl.

Examples of the above-mentioned plant growth regulating compound include thidiazuron, inabenfide, paclobutrazol, and uniconazole.

The present agrochemical active compound contained in the composition of the present invention may be the agrochemical active compound having 1 g or less, 0.5 g or less, or 0.1 g or less of a solubility against water 1L at the temperature of 25°C.

The present surfactant contained in the composition of the present invention represents a surfactant having 45 % or less as the viscosity increase ratio $\Delta V$ expressed by the above equation (a). The viscosity increase ratio $\Delta V$ is preferably 20 % or less, more preferably 15 % or less, and may be 10 % or less, 5 % or less, or 0 % or less. A lower limit of the viscosity increase ratio $\Delta V$ is not particularly limited as long as it is within the above-mentioned range, and is usually -80 % or more, and may be -60 % or more, or may be -50 % or more.

By setting the viscosity increase ratio $\Delta V$ of the present surfactant to be within the above-mentioned range, even when the total content of the present agrochemical active compound in the composition of the present invention is 20 % by mass or more based on 100 % by mass of the composition, the composition of the present invention can have a good storage stability. The good storage stability as used herein includes a capability of suppressing an aggregation or a growth of particles of the present agrochemical active compound during a storage at high temperature. Also the composition of the present invention shows a good preparation efficiency by containing the present surfactant. The good preparation efficiency as used herein include a capability of grinding the particle size of the present agrochemical active compound to an intended particle size thereof effectively in the preparation stage of the composition of the present invention.

The viscosity V1 in the above-mentioned equation (a) is not particularly limited, and for example, may be within a range of 0.010 Pa · s or more to 0.070 Pa · s or less, may be within a range of 0.015 Pa · s or more to 0.065 Pa · s or less, or may be within a range of 0.020 Pa · s or more to 0.060 Pa · s or less.

The viscosity V2 in the above-mentioned equation (a) is not particularly limited, and for example, may be within a range of 0.010 Pa · s or more to 0.100 Pa · s or less, or may be within a range of 0.010 Pa · s or more to 0.080Pa · s or less.

Each of the viscosity V1 and the viscosity V2 represents a value measured with a stress control type of rotation rheometer. More specifically, the viscosity of the composition X is measured with a rheometer, taking a flat plate as a jig (diameter 60 mm), and keeping 40°C for 2 minutes under a condition of Gap 400 $\mu$m, and then increasing the temperature to 80°C at an increase rate of 1°C / min at a shear rate 1000 s-1, and the measured value at the temperature of 40°C represents a viscosity V1, and the measured value at the temperature of 60°C represents a viscosity V2. A viscosity increase ratio $\Delta V$ is calculated by using the obtained viscosity V1 and the viscosity V2 according to the above-mentioned equation (a). The composition X comprises the compound (I) and a surfactant which are contained in the composition of the present invention by the above-mentioned contents thereof, and a silicon defoamer and water, and can be prepared

according to the method described in the below-mentoned working examples. Here when the composition X is prepared, the compound (I) having a purity (R isomer- containing ratio) of 95 % by mass or more is used.

The present surfactant is not particularly limited as long as the surfactant is one having the viscocity increase ratio ΔV being within the above-mentioned range, and includes anionic surfactant, nonionic surfactant, cationic surfactant, and amphoteric surfactant. The examples of the present surfactant include preferably one or more of the surfactants selected from the group consisting of anionic surfactant and nonionic surfactant.

Examples of the present surfactant include preferably one or more of the surfactants selected from the group consisting of lignin sulfonate, acrylic polymer, acrylic graft copolymer, and modified stylene maleic anhydride copolymer, and the present surfactant includes more preferably one or more of the surfactants selected from the group consisting of lignin sulfonate and acrylic graft copolymer.

The content of the present surfactant in the composition of the present invention is usualy 1 % by mass or more, and may be 3 % by mass or more, may be 4 % by mass or more, and may be 10 % by mass or less, based on 100 % by mass of the composition of the present invention. When the surfactant comprises two or more of the present surfactants, the content of the present surfactant represents the total content thereof.

Examples of the thickener contained in the composition of the present invention include water-soluble polymer. Examples of the water-soluble polymer include water-soluble natural polysaccharides such as xanthan gum, welan gum, gellam gum, guar gum, locust bean gum, gum arabic, carrageenan, pectin, and sodium alginate; and water-soluble synthetic polymers of cellulose drivatives such as methyl cellulose, carboxymethyl-cellulose sodium, hydroxyethyl cellulose, hydroxypropyl cellulose, and hydroxypropyl methylcellulose; and the others.

The content of the water-soluble poymer in the composition of the present invention is usually 0.05 % by mass or more and may be 0.1 % by mass or more, or is usually 0.5 % by mass or less and may be 0.3 % by mass or less, based on 100 % of the composition of the present invention. When the composition of the present invention comprises two or more of the water-soluble polymers, the content of the water-soluble polymer represents the total content thereof.

The thickeners contained in the composition of the present invention may contain mineral fine powder such as colloidal hydrous aluminum silicate, colloidal hydrous magnesium silicate, magnesium aluminum silicate, and silica and the others, in addition to the water-soluble polymer.

The content of the thickener in the composition of the present invention is usually 0.1 % by mass or more and may be 0.2 % by mass or more, or is usually 0.6 % by mass or less and may be 0.4 % by mass or less, based on 100 % by mass of the composition of the present invention. When the composition of the present invention comprises two or more kinds of the thickeners, the content of the thickener represents the total content thereof.

Examples of the antifreezing agent contained in the composition of the present invention include ethylene glycol, diethylene glycol, glycerin, propylene glycol, and urea, and the others. The content of the antifeezing agent in the composition of the present invention is usually within the range of 3 % by mass or more to 8 % by mass or less, and may be within the range of 3 % by mass or more to 6 % or less. When the composition of the present invention comprises two or more of the antifreezing agents, the content of the antifreezing agent represents the total content thereof.

The composition of the present invention comprises water. The water used in the composition of the present invention is not particularly limited, it can be used the water that can be usually used in the preparation of an aqueous suspension concentrate, such as tap water, well water, and deionized water.

The content of water in the composition of the present invention is usually 30 % by mass or more and may be 40 % by mass or more, or may be 43 % by mass or more, or is usually 75 % by mass or less and may be 65 % by mass or less, or may be 60 % by mass or less.

The composition of the present invention may comprise if needed, any agrochemical active compounds other than the present agrochemical active compound, any surfactants other than the present surfactant, as well as any formulation auxiliary agents such as a defoamer, a preservative, a pH regulator, a coloring agent and the others.

Examples of the agrochemical active compounds which may be contained in the composition of the present invention, other than the present agrochemical active compound include one or more of the compounds selected from the group consisting of an insecticidal compound, a fundicidal compound, a herbicidal compound, a plant growth regulating compound, and a biological agrochemical active compound (that is, a biological control agent).

The composition of the present invention may comprise any surfactants other than the present surfactant as long as the effect of the present invention is not lost, and examples of the surfactant include an anionic surfactant, a nonionic surfactant, a cationic surfactant, and an amphoteric surfactant.

Examples of the defoamer which may be contained in the composition of the present invention include silicon defoamer. The content of the defoamer in the composition of the present invention is usually 0.01 % by mass or more and may be 0.05 % by mass or more, may be 0.1 % by mass or more, or is also usually 0.4 % by mass or less and may be 0.3 % by mass or less, based on 100 % by mass of the composition of the present invention.

Examples of the preservatives which may be contained in the composition of the present invention include butyl paraben (n-butyl para-hydroxybenzoate) and 1,2-benzisothiazolin-3-one and the others. The content of the preservative in the composition of the present invention is usually 0.1 % by mass or more and may be 0.2 % by mass or more, or is also

usually 0.5 % by mass or less and may be 0.4 % by mass or less, based on 100 % by mass of the composition of the present invention.

Examples of the pH regulator which may be contained in the composition of the present invention include carboxylic acid and salts thereof such as citric acid monohydrate, acetic acid and sorbic acid, phoshoric acid and salts thereof, as well as boric acid and salts thereof.

Examples of the coloring agent which may be contained in the composition of the present invention include inorganic pigments such as iron oxide, thitanium oxide, and prussian blue; and organic pigments such as alizarin dye, azo dey, and metallophthalocyanin dye; and the others.

The content of the formulation auxiliary agents in the composition of the present invention is usualy 0.2 % by mass or more, and may be 1 % by mass or more, may be 5 % by mass or more, or is also usually 10 % by mass or less, and may be 7 % by mass or less.

The composition of the present invention can be prepared by a finely grinding method in which the present agrochemical active compound, the present surfactant, and if needed, any formulation auxiliary agents are added into water, and the resulting mixture is stirred and mixed well with a high speed stirrer, and then the mixture is finely grinded with a wet grinding mill such as a bead mill; or another method in which the present agrochemical active compound is finely grinded with a dry grinding mill such as a jet mill, and then the finely grinded present agrochemical active compound, the present surfactant, and if needed, any formulation auxiliary agents are added into water, and the resulting mixture is stirred and mixed well with a high speed stirrer.

The composition of the present invention can be applied to a plant or to habitat where the plant grows to control plant diseases.

A user usally applies the composition of the present invention from a knapsack sprayer, a spray tank, a spray plane, or an irrigation system. Usually the composition of the present invention is diluted with water to be adjusted to the intended application concentration to obtain a spray solution. The spray solution is applied by usually 20 to 2,000 L, preferably 100 to 300 L, per 1 hectare.

The application rate of the composition of the present invention may be varied depending on the kinds of plant, the kinds or occurrence frequencies of plant diseases to be controlled, the applicaiton timing, the application method, the applicaiton area, or the climate conditions and the others, and include as the application rate of the compound (I) usually 1 to 500 g, preferably 10 to 100 g, per 1000 $m^2$.

The selection of the surfactant according to the present invention (hereinafter, sometimes referred to as "method of the present invention") is utilized to select a surfactant for aqueous suspension concentrate containing the compound (I). The method of the present invention comprises the following step 1) to step 3).

a step 1) of preparing a composition X which is characterized by consisting of a compound (I) 37.00 parts by mass, a surfactant 4.63 parts by mass, a silicon defoamer 0.19 parts by mass, and water 32.85 parts by mass,
a step 2) of measuring a viscosity of the composition X which is prepared in the step 1) while increasing the temperature from 40°C to 80°C at an increase ratio of 1 °C/min, and
a step 3) of selecting a surfactant having 45 % or less as a vicosity increase ratio $\Delta V$ [%] expressed by above equation (a) which is contained in a composition X.

The step 1) is conducted according to the methods described in the below-mentioned working examples. The step 2) is conducted according to the above-mentioned measurement methods of the viscosity V1 and the viscosity V2. The step 3) is conducted by calculating the viscosity increase ratio $\Delta V$ using the viscosity V1 and the viscosity V2 of the composition X obtained in the step 2) according to the above-mentioned equation (a), and then selecting a surfactant which is contained in the composition X having 45 % or less of $\Delta V$. The present surfactant which is selected according to the method of the present invention is applied for the use of the aqueous suspension concentrate comprising the compound (I).

## EXAMPLES

Hereinafter, the present invention is explained in more detail by using Examples and Comparative Examples, however, the present invention should not be limited to these examples.

[Preparation of Compositions X(1) to (6), and calculation of velocity increase ratio $\Delta V$]

(Preparation of Compositions X (1) to (6))

The compound (I) (purity: 97.8 % by mass, content ratio of R isomer to S isomer: R isomer / S iosmer = 98.3 / 1.7) 37.00 parts by mass, surfactant (Reax 910, sodium lignosulfonate, manufactured by Ingevity Corp.) 4.63 parts by mass,

silicon defoamer (Xiameter AFE-1530, manufactured by Dow Corning Toray Co., Ltd.) 0.19 parts by mass, and deionized water 32.85 parts by mass were mixed to obtain a mixture (MX1). The mixture (MX1) was subjected to a wet grinding method under the condition of 10 m/s of a circumferential speed such that the volume median diameter of the compound (I) was adjusted to 11 μm or less with a horinzontal type of bead mill (DYNO-MILL KDL, manufactured by WILLY A. BACHOFEN AG Machinenfabrik Corp.) to prepare the composition X (1).

A similar process to that of the composition X(1) was conducted by using Tersperse (Registered trademark) 2500 (acrylic graft copolymer, manufactured by Huntsman Petrochemical Corp.) 4.63 parts by mass in place of the surfactant used in the preparation of the composition X(2).

A similar process to that of the composition X(1) was conducted by using Tersperse (Registered trademark) 2612 (modified stylene maleic anhydride copolymer, manufactured by Huntsman Petrochemical Corp.) 4.63 parts by mass in place of the surfactant used in the preparation of the composition X(3).

A similar process to that of the composition X(1) was conducted by using Agrilan 788 (acrylic polymer, manufactured by Nouryon Corp.) 4.63 parts by mass in place of the surfactant used in the preparation of the composition X(4) .

A similar process to that of the composition X(1) was conducted by using Selvol 24-203 (polyvinyl alcohol, manufactured by Sekisui Specialist Chemicals Co. Ltd.) 4.63 parts by mass in place of the surfactant used in the preparation of the composition X(5).

A similar process to that of the composition X(1) was conducted by using Etylan 500LQ (polyalkoxylate butyl ether, manufactured by Nouryon Corp.) 4.63 parts by mass in place of the surfactant used in the preparation of the composition X(6).

(Calculation of viscosity increase ratio ΔV)

The viscosity V1 at the temperature of 40°C and the viscosity V2 at the temperature of 60°C were measured on the compositions X (1) to X(6) respectively with a rheometer (AR-G2, manufactured by TA Instruments Inc.). A flat plate (diameter 60 mm) was taken as a jig, and the standing time was held at 40°C for 2 minutes under a condition of Gap 400 μm and then the temperature was increased to 80°C at an increase rate of 1 °C/min at a shear rate 1,000 s-1, and the viscosity increase ratio ΔV was calculated using the viscosity V1 and the viscosity V2 which were obtained by the measurement results according to the above-mentioned equation (a). The results are shown in Table 1 and Table 2.

[Preparation Example 1]

The compound (I) (purity: 96.8 % by mass, the content ratio of R isomer to S isomer: R isomer / S isomer = 98.9 / 1.1) 37 parts by mass, the surfactant (Reax 910, sodium lignosulfonate, manufactured by Ingevity Corp.), 4.63 parts by mass, defoamer (Xiameter AFE-1530, silicon defoamer, manufactured by Dow Corning Toray Co., Ltd.) 0.095 parts by mass, and deionized water 25.52 parts by mass were mixed to obtain a mixture (MX1). The mixture (MX1) was subjected to a wet grinding method with a horinzontal type of bead mill (DYNO-MILL KDL, manufactured by WILLY A. BACHOFEN AG Machinenfabrik Corp.) to obtain a suspension.

Xanthan gum (Kelzan, manufactured by CP Kelco Corp.) 0.19 parts by mass, magnesium aluminium silicate (Veegum R, manufactured by Vanderbilt Company Inc.) 0.37 parts by mass, propylene glycol 4.63 parts by mass, and the preservative (containing 1,2-benzothiazolinane as active ingredient, manufactured by Proxel GXL, Lonza Inc.) 0.28 parts by mass were added deionized water 19.23 parts by mass, and the stirring was continuted for 2 hours to obtain a mixure (M2).

To the suspension obtained above was added the mixture (M2), and the resulting mixture was mixed, and silicon defoamer (Xiameter AFE-1530, silicon defoamer, manufactured by Dow Corning Toray Co., Ltd.) 0.095 parts by mass, and deionized water 7.96 parts by mass were further added thereto to obtain the compound (1) of the present invention as an aqueous suspension concentrate. The volume median diameter of the compound (1) in the composition of the present invention was measured by a wet measurement with a laser diffraction particle size distribution analyzer (Mastersizer 2000, manufactued by Malvern Panalytical) to observe 2.4 μm.

[Preparation Example 2]

A similar process to that of the Preparation Example 1 was conducted by using Tersperse (Registered trademark) 2500 (acrylic graft copolmer, manufactured by Huntsman Petrochemical Corp.) 4.63 parts by mass in place of Reax 910 as the surfactant to obtain the composition (2) of the present invention as an aqueous suspension concentrate. The volume median diameter was measured on the compound (I) in the composition (2) of the present invention similarly to that of Preparation Example 1 to observe 2.1 μm.

[Preparation Example 3]

A similar process to that of the Preparation Example 1 was conducted by using Tersperse (Registered trademark) 2612 (modified stylene maleic anhydride copolymer, manufactured by Huntsman Petrochemical Corp.) 4.63 parts by mass in place of Reax 910 as the surfactant to obtain the composition (3) of the present invention as an aqueous suspension concentrate. The volume median diameter was measured on the compound (I) in the composition (3) of the present invention similarly to that of Preparation Example 1 to observe 2.2 μm.

[Preparation Example 4]

A similar process to that of the Preparation Example 1 was conducted by using Agrilan 788 (acrylic polymer, manufactured by Nouryon Corp.) 4.63 parts by mass in place of Reax 910 as the surfactant to obtain the composition (4) of the present invention as an aqueous suspension concentrate. The volume median diameter was measured on the compound (I) in the composition (4) of the present invention similarly to that of Preparation Example 1 to observe 2.0 μm.

[Comparative Preparation Example 1]

A similar process to that of the Preparation Example 1 was conducted by using Selvol 24-203 (polyvinyl alcohol, manufactured by Sekisui Specialist Chemicals Co. Ltd.) 4.63 parts by mass in place of Reax 910 as the surfactant to obtain the comparative composition (1) as an aqueous suspension concentrate. The volume median diameter was measured on the compound (I) in the comparative composition (1) similarly to the method of Preparation Example 1 to observe 2.6 μm. The comparative composition (1) was needed longer time than those of the compositions (1) to (4) of the present invention to mill it, and showed a poor preparation efficiency.

[Comparative Preparation 2]

A similar process to that of the Preparation Example 1 was conducted by using Etylan 500LQ (polyalkoxylate butyl ether, manufactured by Nouryon Corp.) 4.63 parts by mass in place of Reax 910 as the surfactant to obtain the comparative composition (1) as an aqueous suspension concentrate. The volume median diameter was measured on the compound (I) in the comparative composition (2) similarly to the method of Preparation Example 1 to observe 2.8 μm. The comparative composition (2) was needed longer time than those of the compositions (1) to (4) of the present invention to mill it, and showed a poor preparation efficiency.

[Test Example 1: Evaluation of storage stability]

The composition (1) of the present invention which was prepared in the Preparation Example 1 was placed in a 50mL glass bottle, and the bottle was sealed closely and kept in an incubator which was set to temperature 54°C for 2 weeks. The volume median diameter of the composition (1) of the present invention which was kept in the above incubator during a prescribed duration was measured. The volume median diameter was measured by a wet measurement with a laser diffraction particle size distribution analyzer (Mastersizer 2000, manufactued by Malvern Panalytical).

The volume median diameter was measured on the compositions (2) to (4) of the present invention which were prepared in the Preparation Examples 2 to 4 and the comparative compositions 1 to 2 which were prepared in the comparative preparation examples 1 to 2 similarly to the above-mentioned method. The rate of change in the volume median diameter was calculated according to the equation below.

Rate of change in volume median diameter [%] = (volume median diameter after storage at 54°C for 2 weeks / volume median diameter immediately after preparation) × 100

The rate of change in the calculated volume median diameter was judged on the basis of the below-mentioned criteria, and was evaluated the storage stability. The results are shown in Table 1 and Table 2.

Criteria A: the rate of change in the volume median diameter was less than 150 %.

Criteria B: the rate of change in the volume median diameter was 150 % or more.

[Table 1]

| Preparation Example No. | 1 | 2 | 3 | 4 |
|---|---|---|---|---|
| Compostion of the present invention | (1) | (2) | (3) | (4) |
| Surfactant | | | | |
| Kinds | Reax 910 | Tersperse 2500 | Tersperse 2612 | Agrilan 788 |
| Component | sodium lignosulfon ate | acrylic graft copolmer | modified stylene maleic anhydride copolymer | acrylic polymer |
| Composition X | (1) | (2) | (3) | (4) |
| Viscosity V1 [Pa · s] | 0.050 | 0.029 | 0.032 | 0.029 |
| Viscosity V2 [Pa · s] | 0.029 | 0.023 | 0.036 | 0.041 |
| Viscosity increase ratio ΔV [%} | -41.7 | -20.6 | 10.8 | 40.6 |
| Evaluation of storage stablity | A | A | A | A |

[Table 2]

| Comparative Preparation Example No. | 1 | 2 |
|---|---|---|
| Comparative Compostion | (1) | (2) |
| Surfactant | | |
| Kinds | Selvol 24-203 | Ethylan 500 LQ |
| Component | polyvinyl alcohol | polyalkoxy late butyl ether |
| Composition X | (5) | (6) |
| Viscosity V1 [Pa · s] | 0.132 | 0.045 |
| Viscosity V2 [Pa · s] | 0.978 | 0.066 |
| Viscosity increase ratio ΔV [%} | 639.9 | 47.7 |
| Evaluation of storage stablity | B | B |

INDUSTRIAL APPLICABILITY

A composition of the present invention has a good storage stability even when the agrochemical active compound is suspended into water such that the total content of the agrochemical active compound including the compound (I) is 20 % by mass or more.

## Claims

**1.** A composition comprising an agrochemical active compound which is poorly water-soluble and is in a form of a solid at the temperature of 25°C, a surfactant, a thickener, an antifreezing agent and water,

the content of the agrochemical active compound is 20 % by mass or more based on 100 % by mass of the composition,
the agrochemical active compound includes at least the compound represented by following formula (I),
the surfactant has a viscosity increase ratio expressed by the following equation (a): ΔV [%] being 45 % or less, and
the thickener includes a water-soluble polymer,

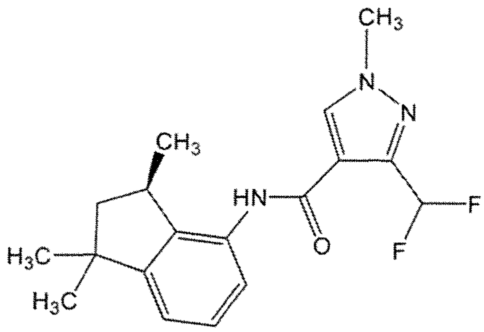

(I)

$$\Delta V\ [\%] = (V2-V1)/V1 \times 100 \quad (a)$$

[In equation (a),
V1 represents a viscosity [Pa . s] at the temperature of 40 °C of the below-mentioned composition X, and
V2 represents a viscosity [Pa . s] at the temperature of 60 °C of the below-mentioned composition X,
the composition X is a composition which is **characterized by** consisting of the compound represented by formula (I) 37.00 parts by mass, the surfactant 4.63 parts by mass, a silicon defoamer 0.19 parts by mass, and water 32.85 parts by mass].

**2.** The composition according to claim 1 wherein the content of the surfactant is 4 % by mass or more.

**3.** The composition according to claim 1 or 2 wherein the surfactant includes one or more compounds selected from the group consisting of a lignin sulfonate, an acrylic polymer, an acrylic graft copolymer, and a modified stylene-maleic anhydride copolymer.

**4.** The composition according to any one of claims 1 to 3 wherein the viscosity increase ratio of the surfactant is 20 % or less.

**5.** A method for selecting a surfactant for aqueous suspension concentrate containing a compound represented by following formula (I), which comprises

a step of preparing a composition X which is **characterized by** consisting of a compound represented by following formula (I) 37.00 parts by mass, a surfactant 4.63 parts by mass, a silicon defoamer 0.19 parts by mass, and water 32.85 parts by mass,
a step of measuring a viscosity of the composition X while increasing the temperature from 40°C to 80°C at an increase ratio of 1 °C/min, and
a step of selecting a surfactant having 45 % or less as a vicosity increase ratio ΔV [%] expressed by following equation (a) which is contained in a composition X.

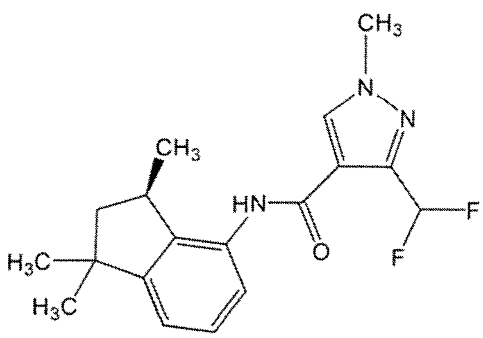

(I)

$$\Delta V\ [\%] = (V2-V1)/V1 \times 100 \quad (a)$$

[In equation (a),
V1 represents a viscosity [Pa . s] at the temperature of 40 °C of the below-mentioned composition X, and
V2 represents a viscosity [Pa . s] at the temperature of 60 °C of the below-mentioned composition X].

**INTERNATIONAL SEARCH REPORT**

International application No. **PCT/JP2023/009547**

**A. CLASSIFICATION OF SUBJECT MATTER**

***A01N 43/56***(2006.01)i; ***A01N 25/00***(2006.01)i; ***A01N 25/30***(2006.01)i; ***A01P 3/00***(2006.01)i; ***A01P 7/04***(2006.01)i; ***A01P 13/00***(2006.01)i; ***A01P 21/00***(2006.01)i
FI: A01N43/56 C; A01N25/00 101; A01N25/30; A01P3/00; A01P7/04; A01P13/00; A01P21/00

According to International Patent Classification (IPC) or to both national classification and IPC

**B. FIELDS SEARCHED**

Minimum documentation searched (classification system followed by classification symbols)

A01N43/56; A01N25/00; A01N25/30; A01P3/00; A01P7/04; A01P13/00; A01P21/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2022-6186 A (SUMITOMO CHEMICAL CO., LTD.) 12 January 2022 (2022-01-12) claims, examples | 1-5 |
| A | JP 2019-62760 A (SUMITOMO CHEMICAL CO., LTD.) 25 April 2019 (2019-04-25) claims, examples | 1-5 |
| A | JP 2012-25735 A (SUMITOMO CHEMICAL CO., LTD.) 09 February 2012 (2012-02-09) claims, examples | 1-5 |
| A | JP 2018-172389 A (SUMITOMO CHEMICAL CO., LTD.) 08 November 2018 (2018-11-08) claims, examples | 1-5 |
| P, X | US 2023/0020482 A1 (VALENT U. S. A. LLC) 19 January 2023 (2023-01-19) claims, examples, tables 1, 3 | 1, 3-4 |
| P, A | | 2, 5 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 May 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/009547**

| Patent document cited in search report | Publication date (day/month/year) | Patent family member(s) | Publication date (day/month/year) |
|---|---|---|---|
| JP 2022-6186 A | 12 January 2022 | (Family: none) | |
| JP 2019-62760 A | 25 April 2019 | (Family: none) | |
| JP 2012-25735 A | 09 February 2012 | JP 2015-232021 A<br>JP 2017-105838 A<br>US 2013/0096174 A1<br>claims, examples<br>WO 2011/162397 A1<br>EP 2584902 A1<br>TW 201200020 A<br>AR 82096 A1<br>AU 2011270077 A1<br>CA 2803268 A1<br>CN 102958367 A<br>MX 2012014631 A<br>CO 6640320 A2<br>KR 10-2013-0122609 A<br>RU 2013103089 A<br>DK 2584902 T3<br>ES 2544892 T3<br>PT 2584902 E<br>UA 109547 C2<br>IL 223547 A<br>ZA 201209084 B<br>HU E027958 T2<br>PL 2584902 T3<br>CL 2012003646 A1 | |
| JP 2018-172389 A | 08 November 2018 | (Family: none) | |
| US 2023/0020482 A1 | 19 January 2023 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022039268 A
- WO 2011162397 A1